# FASCICULE DE BREVET EUROPEEN

(11) **EP 2 243 248 B1**
(45) Date de publication et mention de la délivrance du brevet: **29.04.2015**
(21) Numéro de dépôt: 08863582.6
(22) Date de dépôt: 10.12.2008
(51) Int. Cl.: H04L 9/32, H04L 12/58, H04L 29/06, H04L 12/24, G06F 17/30, G06Q 10/00

(54) **PROCEDE DE GESTION DE COURRIER RECOMMANDE PAR VOIE ELECTRONIQUE**
VERFAHREN ZUM ELEKTRONISCHEN VERWALTEN VON EINGESCHRIEBENER POST
METHOD OF MANAGING REGISTERED MAIL ELECTRONICALLY

(30) Priorité: 10.12.2007 FR 0708584; 10.01.2008 FR 0800147
(43) Date de publication de la demande: 27.10.2010
(73) Titulaire: Logidoc Solutions, 87000 Limoges (FR)
(72) Inventeur: PEAUDECERF, Bertrand, F-87350 Panazol (FR); PREVEL, Jean-Claude, F-87100 Limoges (FR)
(74) Mandataire: CAPRI
(86) Numéro de dépôt international: PCT/FR2008/052263
(87) Numéro de publication internationale: WO 2009/080985

(56) Documents cités:
- FR-A- 2 839 406
- FR-A- 2 900 013

## Description

La présente invention concerne un procédé de gestion du courrier recommandé par voie électronique.

La lettre recommandée existe depuis plus de deux siècles. Il s'agit aujourd'hui d'un courrier matérialisé sur une feuille, datée et signée de son auteur et placée dans une enveloppe sur laquelle figure l'adresse du destinataire. L'ensemble clos est déposé à un bureau de poste qui le transmettra et le remettra à son destinataire contre apposition d'une date et d'un émargement. La chronologie de la transaction est attestée par le cachet figurant sur l'enveloppe et sur le document joint matérialisant la prise en compte du courrier. Authentification, confidentialité et traçabilité caractérisent la lettre recommandée. Cependant, le recommandé papier comporte plusieurs inconvénients. En particulier, il apporte la preuve du contenant mais pas du contenu, il se limite au transport de documents réels, et il ne peut apporter la preuve de la lecture du courrier. Pour remédier à ces problèmes, il a été proposé d'envoyer le courrier recommandé par voie électronique. En effet, contrairement à son homologue papier, le recommandé électronique permet notamment d'apporter la preuve du contenu et pas seulement du contenant dans la mesure où il est possible de demander à un tiers de confiance de conserver l'original et donc de le produire en cas de litige. Il permet aussi de transporter des fichiers informatiques, images, vidéos, etc. Il permet également d'établir que le courrier a non seulement été accepté mais également lu, en plus de la signature électronique qui atteste de la présentation de l'envoi. Le document FR-2 900 013 décrit un procédé de ce type utilisant deux mémoires distinctes, l'une accessible par l'auteur du courrier et l'autre par son destinataire, chacune de ces mémoires recevant un original dudit courrier. Ce procédé est complexe, et l'existence de deux originaux n'est pas souhaitable, car ceci induit un risque potentiel de litige et impose une double sécurisation. De plus, pour que le processus de recommandé électronique soit tout aussi valable que la lettre recommandée papier, il doit s'appuyer sur des fonctions essentielles d'un processus à valeur probatoire ou probante. Or, dans les procédés existants, cette valeur probatoire n'est pas toujours garantie. En particulier, chaque étape entre le début et la fin de la chaîne doit être sécurisée et garantie.

La présente invention a pour but de fournir un procédé de gestion de courrier recommandé par voie électronique qui ne reproduit pas les inconvénients susmentionnés.

La présente invention a notamment pour but de fournir un procédé de gestion de courrier recommandé par voie électronique qui garantit l'intégrité du document formant le courrier du début à la fin du procédé, depuis la création du document jusqu'à sa consultation par le destinataire et son archivage.

La présente invention a aussi pour but de fournir un procédé de gestion de courrier recommandé par voie électronique qui est simple et peu coûteux à réaliser, à installer et à utiliser.

La présente invention a donc pour objet un procédé de gestion de courrier recommandé par voie électronique tel que décrit dans la revendication 1. Des modes de réalisation avantageux sont décrits dans les revendications dépendantes.

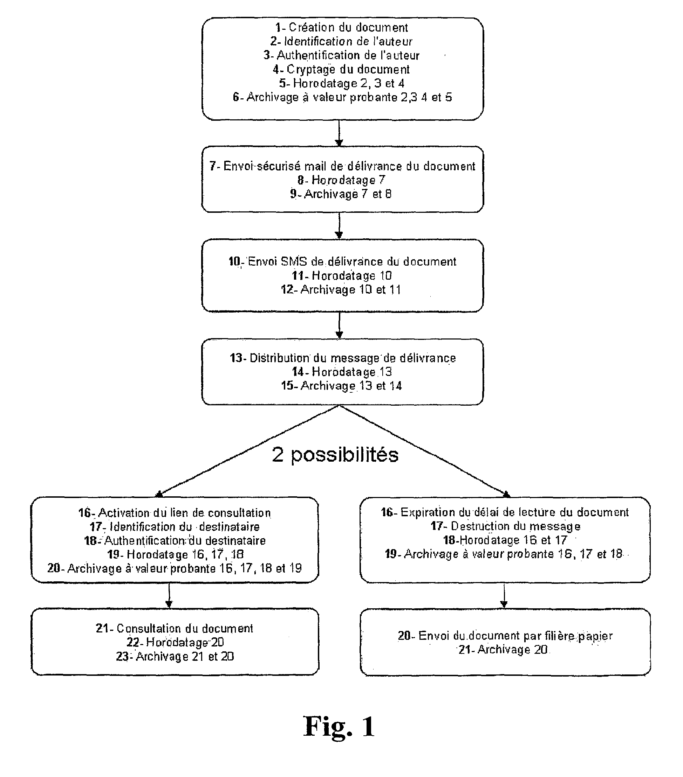

Ces caractéristiques et avantages et d'autres de la présente invention apparaîtront plus clairement à la lecture de la description détaillée suivante, donnée à titre d'exemple non limitatif, et qui se réfère à la figure 1 jointe, qui est un schéma illustrant les différentes étapes du procédé selon un mode de réalisation particulier de l'invention.

Le procédé de l'invention utilise principalement un poste de travail d'un auteur d'un document à envoyer sous forme d'un courrier recommandé électronique, un poste de travail d'un destinataire destiné à recevoir ce document, un serveur pour gérer le document entre l'auteur et le destinataire, et un tiers de confiance pour garantir et certifier toutes les étapes du procédé. Bien entendu, le système de la présente invention peut comporter plusieurs auteurs, plusieurs postes de travail pour chaque auteur, plusieurs destinataires, plusieurs postes de travail par destinataire, plusieurs serveurs, et/ou plusieurs tiers de confiance.

Les tiers de confiance peuvent être des organismes adaptés à stocker de manière sure des données électroniques. Il peut s'agir d'autorités de certification aptes à garantir des transmissions sécurisées de documents cryptés entre des personnes autorisées, identifiées et authentifiées. En particulier, les tiers de confiance peuvent comporter des serveurs de certification adaptés à émettre des certificats de garantie. Ils sont aussi adaptés à émettre des clés de cryptage du type PKI (Public Key Infrastructure, ou infrastructure à clé publique), dont le fonctionnement est bien connu.

L'invention sera décrite ci-après en se référant à une séquence d'étapes avantageuse, mais celle-ci ne doit pas être considérée comme étant limitative, certaines des étapes décrites ci-après pouvant être optionnelles, d'autres étapes supplémentaires pouvant s'ajouter à celles décrites, et certaines étapes pouvant être interverties entre elles.

### La création du document

Le document peut être créé directement sur le poste de travail de l'auteur, par exemple en utilisant ses logiciels habituels (traitement de texte, tableur, etc.).

Dans une première variante, la personne voulant utiliser le service d'envoi d'un recommandé électronique peut se connecter à une plateforme WEB du serveur et se connecter à son compte client (ou en créer un, le cas échéant), pour y télécharger le document préalablement créé sur son poste de travail. En variante, l'auteur peut aussi créer directement son document depuis l'espace client en se connectant et en créant son document via un formulaire ou similaire.

Dans une seconde variante, l'auteur du document peut utiliser un pilote (aussi appelé driver) paramétrable installé sur son poste de travail, et qui crée sur ce poste de travail une imprimante virtuelle, adaptée à transférer le document audit serveur.

### L'identification et authentification de l'Auteur

L'auteur du document doit être identifié et authentifié de façon claire et incontestable, de préférence par l'intermédiaire de l'utilisation d'un système clé publique / clé privée (chiffrement asymétrique).

### Le cryptage du document

Le document ne doit pas pouvoir être consulté, ni modifié.

Pour cela, avant son envoi, le document est avantageusement transformé en un document PDF associé à un fichier XML (qui contient des données d'information relatives au document, tel que le nombre de page, le nombre de pièces jointes, le pavé adresse extrait du document, etc.) Le document peut alors être signé électroniquement par l'auteur. La signature s'effectue de préférence via un tiers de confiance. Le document final est envoyé sur la plateforme dudit tiers de confiance pour signature. Le document peut notamment être visualisé par l'auteur afin d'être signé numériquement via l'application du tiers de confiance. Le fichier PDF est alors crypté ainsi que le fichier XML associé.

Ensuite les deux fichiers (le fichier PDF et le fichier XML associé) sont compressés dans un fichier archive qui est lui-même crypté.

Le cryptage est de préférence réalisé au moyen de chiffrement asymétrique fourni par un tiers de confiance.

Lorsque le document a été transmis en utilisant le pilote susmentionné installé sur le poste de travail de l'auteur, ce pilote bénéficie lui-même d'une signature sécurisée pour garantir que le document est intègre.

Le fichier archive crypté est réceptionné par le serveur, de préférence via un protocole de transmission sécurisé, du type HTPPS, FTPS ou VPN.

Après réception, ce fichier est décrypté par le serveur, au moyen des clés de décryptage fournies par ledit tiers de confiance.

### Horodatage et archivage à valeur probatoire

Afin d'établir la valeur probatoire du recommandé électronique, chaque étape du procédé est avantageusement horodatée puis archivée par et chez un tiers de confiance.

Le document final signé avec sa clé de contrôle est adressé via un protocole de transmission sécurisé chez un tiers de confiance où ils sont horodatés puis archivés. Ainsi les documents archivés sont infalsifiables.

De même, les étapes d'identification de l'auteur, le cryptage, la transmission au serveur (le cas échéant) et la signature (le cas échéant), ainsi que tous les autres événements sont de préférence horodatés et archivés.

### Envoi du courrier électronique d'information

Après archivage du document, le serveur envoie un courrier électronique d'information au poste de travail du destinataire, pour l'informer qu'un courrier recommandé est disponible. Ce courrier électronique d'information contient un lien de consultation, et le destinataire est informé qu'il peut accéder au document formant ledit recommandé en cliquant sur ce lien dans un délai de consultation prédéterminé. Avantageusement, l'envoi de ce courrier électronique d'information est aussi réalisé via un protocole de transmission sécurisé.

### Horodatage et archivage à valeur probatoire

Le courrier électronique d'information envoyé au destinataire est horodaté puis archivé chez un tiers de confiance.

### Envoi d'un message texte

Pour diminuer les risques que le destinataire ne soit pas au courant qu'un recommandé l'attend sur le serveur, un message texte du type SMS peut être adressé à un téléphone, notamment un téléphone mobile, du destinataire pour lui indiquer qu'il a reçu un recommandé électronique.

### Horodatage et archivage à valeur probatoire

Ce SMS envoyé au destinataire est horodaté et archivé chez un tiers de confiance

### Distribution du courrier électronique d'information

Un accusé de réception est adressé à l'auteur du document pour l'informer que le courrier électronique d'information a bien été distribué au destinataire. Cet accusé de réception est avantageusement envoyé sous la forme d'un courrier électronique.

### Horodatage et archivage à valeur probatoire

Là encore, cette étape est horodatée puis archivée afin de prouver la date de mise à disposition du recommandé.

### Activation du lien de consultation

Si le destinataire clique sur le lien de consultation contenu dans le courrier électronique d'information avant l'expiration du délai de consultation, il va être connecté au serveur.

### Identification et authentification du destinataire

Il doit alors se connecter à son espace de consultation en s'identifiant et en s'authentifiant, de préférence en utilisant son certificat électronique.

### Horodatage et archivage à valeur probatoire

L'activation du lien de consultation ainsi que l'identification et l'authentification du destinataire seront horodatées et archivées.

### Consultation du document

Une fois le destinataire identifié et connecté dans son espace de consultation, il peut consulter son recommandé électronique. Le document peut alors être téléchargé via un protocole de transmission sécurisé sur le poste de travail du destinataire, qui peut alors le consulter, l'enregistrer et/ou l'imprimer.

L'auteur du document recevra à son tour un message, notamment un courrier électronique, indiquant que le destinataire a bien pris connaissance du recommandé électronique.

### Horodatage et archivage à valeur probatoire

L'événement de consultation sera à son tour horodaté puis archivé chez un tiers de confiance afin de prouver la date à laquelle le message a été lu.

### Expiration du délai de consultation

Dans le cas où le destinataire n'a pas consulté son recommandé électronique pendant le délai de consultation choisi par l'auteur, c'est-à-dire que le destinataire n'a pas cliqué sur le lien de consultation contenu dans son courrier électronique d'information, l'espace de consultation est désactivé. Le destinataire ne peut alors plus consulter son recommandé par voie électronique.

Un message correspondant est alors adressé à l'auteur l'informant que le destinataire n'a pas pris connaissance du recommandé électronique pendant le délai de consultation impartit.

### Horodatage et archivage à valeur probatoire

L'événement d'expiration du délai de consultation du courrier électronique d'information est horodaté puis archivé chez un tiers de confiance.

### Envoi du document par filière papier

A défaut d'activation du lien de consultation dans le délai imparti, le recommandé électronique est alors dirigé vers un processus d'envoi par voie postale.

Le recommandé électronique est crypté puis envoyé de façon sécurisé vers un centre éditique qui se chargera de l'impression, de sa mise sous pli et de l'envoi par voie postale.

### Archivage à valeur probatoire

L'ensemble du processus du centre éditique garantit l'intégralité et l'intégrité du document permettant d'assurer l'archivage et le suivi des envois (AR, NPAI).

Ainsi, le procédé de la présente invention permet de :
- réduire significativement les coûts de fabrication, d'affranchissement et autres y afférents,
- d'optimiser et de réduire les coûts de la gestion des courriers recommandés sortants de l'Entreprise sans changer les habitudes de travail,
- de recevoir le courrier recommandé sans délai,
- de dématérialiser les courriers recommandés,
- de personnaliser les envois,
- de conserver l'intégrité des courriers au moyen des signatures électroniques sécurisées,
- d'authentifier l'auteur et le destinataire (certificats électroniques),
- d'apporter la preuve du contenu et non pas seulement du contenant,
- de transporter des fichiers de formats quelconques, et notamment des fichiers numériques, vidéos, images,
- de réaliser des documents constitués de plusieurs fichiers de formats différents,
- d'établir si le recommandé a non seulement été accepté mais également lu,
- de sécuriser et d'améliorer la confidentialité des envois (cryptage),
- de garantir l'acheminement du courrier (impression et envoi par voie postale si non activation du lien de consultation),
- de garantir sa valeur probatoire (identification, authentification, signature électronique, horodatage et archivage par et chez un tiers de confiance de chaque étape du processus).

L'importance et la fiabilité d'un tel procédé reposent sur sa valeur probatoire se caractérisant pas la confidentialité de l'identification et de l'authentification de l'expéditeur et du destinataire (certificat électronique), par l'intégrité et l'intégralité du message et des documents joints (signature électronique, cryptage), par la conservation (archivage chez un tiers de confiance) et par la garantie des dates d'envoi, de réception et de lecture du mail recommandé (horodatage par un tiers de confiance).

L'invention a été décrite en référence à une variante de réalisation particulière, et il est entendu qu'un homme du métier peut y apporter toutes modifications utiles sans sortir du cadre de la présente invention tel que défini par les revendications annexées.

## Revendications

1. Procédé de gestion de courrier recommandé par voie électronique, dans un système comprenant un poste de travail d'un auteur, un serveur, un poste de travail d'un destinataire, au moins un tiers de confiance, et un centre éditique, **caractérisé en ce que** le procédé comporte les étapes suivantes :
- création du document à envoyer à un destinataire sous forme de courrier recommandé;
- identification et authentification de l'auteur ;
- signature électronique du document via un tiers de confiance ;
- cryptage du document ;
- horodatage des étapes d'identification, d'authentification et de cryptage ;
- transmission du document crypté vers un serveur ;
- décryptage du document sur le serveur;
- archivage chez un tiers de confiance de l'identification de l'auteur, du document et des informations d'horodatage ;
- envoi d'un message d'information au poste de travail du destinataire du document, ledit message étant un courrier électronique contenant un lien de consultation du document ;
- horodatage de ladite étape d'envoi ;
- archivage chez un tiers de confiance du message d'information et des informations d'horodatage ;
ledit procédé, en cas d'activation du lien de consultation par le destinataire dans un délai de consultation prédéterminé, comportant les étapes suivantes :
- identification et authentification du destinataire ;
- horodatage de l'étape d'identification et d'authentification,
- archivage chez un tiers de confiance de l'identification, de l'authentification et des informations d'horodatage ;
- consultation du document par le destinataire, notamment par envoi d'une copie du document sur le poste de travail du destinataire ;
- horodatage de l'étape de consultation ;
- archivage chez un tiers de confiance de la consultation et des informations d'horodatage ;
ledit procédé, en cas de non activation du lien de consultation par le destinataire dans ledit délai de consultation prédéterminé, comportant les étapes suivantes :
- horodatage de l'expiration du délai de consultation ;
- archivage chez un tiers de confiance de l'expiration du délai de consultation et des informations d'horodatage ;
- envoi du document vers le centre éditique pour une transmission au destinataire sous forme papier ;
- archivage chez un tiers de confiance de l'étape d'envoi sous forme papier.

2. Procédé selon la revendication 1, dans lequel lesdites étapes d'authentification dudit auteur et dudit destinataire utilisent des certificats électroniques.

3. Procédé selon l'une quelconque des revendications précédentes, dans lequel lesdites étapes de cryptage et décryptage utilisent un chiffrement asymétrique.

4. Procédé selon l'une quelconque des revendications précédentes, dans lequel ledit document est transformé sur le poste de travail en un fichier PDF associé à un fichier XML, puis ledit fichier PDF est signé puis crypté, puis le fichier PDF crypté et le fichier XML sont compressés dans un fichier archive, puis ledit fichier archive est crypté pour être transmis au serveur.

5. Procédé selon l'une quelconque des revendications précédentes, dans lequel toutes les transmissions et tous les envois entre le poste de travail, le serveur, le tiers de confiance et le poste de travail du destinataire sont réalisés via un protocole de transmission sécurisé, notamment du type HTPPS, FTPS ou VPN.

6. Procédé selon l'une quelconque des revendications précédentes, dans lequel le tiers de confiance comporte un serveur de certification adapté à émettre des certificats électroniques.

7. Procédé selon l'une quelconque des revendications précédentes, dans lequel en plus de l'envoi d'un message d'information sous forme de courrier électronique au poste de travail du destinataire du document, le serveur envoie un message texte du type SMS à un appareil téléphonique du destinataire.

8. Procédé selon l'une quelconque des revendications précédentes, dans lequel après envoi d'un message d'information au poste de travail du destinataire, le serveur envoie un accusé de réception au poste de travail de l'auteur sous la forme d'un courrier électronique, pour informer l'auteur que le destinataire a reçu le message d'information.

9. Procédé selon l'une quelconque des revendications précédentes, dans lequel après consultation du document par le destinataire, le serveur envoie un accusé de lecture au poste de travail de l'auteur sous la forme d'un courrier électronique, pour informer l'auteur que le courrier recommandé a été consulté par le destinataire.

10. Procédé selon l'une quelconque des revendications précédentes, dans lequel l'envoi du message d'information au poste de travail du destinataire active un espace de consultation sur le serveur, sur lequel le destinataire peut venir s'identifier et s'authentifier lorsqu'il clique sur le lien de consultation dans ledit délai prédéterminé.

11. Procédé selon la revendication 10, dans lequel, en cas de non activation du lien de consultation par le destinataire dans le délai de consultation prédéterminé, ledit espace de consultation est désactivé.

12. Procédé selon l'une quelconque des revendications précédentes, dans lequel le document objet du courrier recommandé peut être formé d'un ou plusieurs fichiers de format quelconques.

13. Procédé selon l'une quelconque des revendications précédentes, dans lequel un pilote est installé sur le poste de travail de l'auteur, créant sur ledit poste de travail une imprimante virtuelle paramétrable, par l'intermédiaire de laquelle l'auteur peut transmettre le document qu'il a créé audit serveur.

## Patentansprüche

1. Verfahren zum elektronischen Verwalten von eingeschriebener Post mittels eines Systems, welches umfasst: einen Arbeitsplatz eines Autors, einen Server, einen Arbeitsplatz eines Empfängers, zumindest eine vertrauenswürdige dritte Partei und ein Editions-Zentrum, **dadurch gekennzeichnet, dass** das Verfahren die folgenden Schritte umfasst:
- Erzeugen des in Form eingeschriebener Post zu einem Empfänger zu sendenden Dokuments;
- Identifikation und Authentifikation des Autors;
- Elektronische Signierung des Dokuments mittels einer vertrauenswürdigen dritten Partei;
- Verschlüsselung des Dokuments;
- Zeitregistrierung der Schritte der Identifikation, der Authentifikation und der Verschlüsselung;
- Übertragen des verschlüsselten Dokuments zu einem Server;
- Entschlüsseln des Dokuments auf dem Server;
- Archivieren der Identifikation des Autors, des Dokuments und der Zeitregistrierungs-Information(en) bei einer vertrauenswürdigen dritten Partei;
- Versenden einer Benachrichtigungs-Mitteilung an den Arbeitsplatz des Empfängers des Dokuments, welche Mitteilung eine elektronische Nachricht ist, welche einen Abruf-Link für das Dokument enthält;
- Zeitregistrierung dieses Benachrichtigungs-Schritts;
- Archivieren der Benachrichtigungs-Mitteilung und der Zeitregistrierungs-Information(en) bei einer vertrauenswürdigen dritten Partei;
wobei das genannte Verfahren im Falle des Aktivierens des Abruf-Links durch den Empfänger innerhalb einer vorbestimmten Abruf-Frist die folgenden Schritte aufweist:
- Identifikation und Authentifikation des Empfängers;
- Zeitregistrierung des Schritts der Identifikation und der Authentifikation,
- Archivieren der Identifikation, der Authentifikation und der Zeitregistrierungs-Information(en) bei einer vertrauenswürdigen dritten Partei;
- Abruf des Dokuments durch den Empfänger, insbesondere mittels Versendens einer Kopie des Dokuments zum Arbeitsplatz des Empfängers;
- Zeitregistrierung des Abruf-Schritts;
- Archivieren des Abrufs und der Zeitregistrierungs-Information(en) bei einer vertrauenswürdigen dritten Partei;
wobei das genannte Verfahren im Falle des Nicht-Aktivierens des Abruf-Links durch den Empfänger innerhalb der genannten vorbestimmten Abruf-Frist die folgenden Schritte aufweist:
- Zeitregistrierung des Ablaufs der Abruf-Frist
- Archivieren des Ablaufs der Abruf-Frist und der Zeitregistrierungs-Information(en) bei einer vertrauenswürdigen dritten Partei;
- Senden des Dokuments zum Editions-Zentrum zur Übermittelung zum Empfänger in Papierform;
- Archivieren des Schrittes des Versendens in Papierform bei einer vertrauenswürdigen dritten Partei.

2. Verfahren gemäß Anspruch 1, wobei die genannten Schritte der Identifikation des genannten Autors und des genannten Empfängers elektronische Zertifikate verwenden.

3. Verfahren gemäß einem der vorhergehenden Ansprüche, wobei die genannten Schritte des Verschlüsselns und Entschlüsselns eine asymmetrische Verschlüsselung verwenden.

4. Verfahren gemäß einem der vorhergehenden Ansprüche, wobei das genannte Dokument zum Arbeitsplatz mittels einer PDF-Datei, welche mit einer XML-Datei assoziiert ist, übertragen wird, wobei anschließend die genannte PDF-Datei signiert und anschließend verschlüsselt wird, wobei anschließend die verschlüsselte PDF-Datei und die XML-Datei in eine Archiv-Datei komprimiert werden, wobei anschließend die genannte Archiv-Datei verschlüsselt wird um zum Server übertragen zu werden.

5. Verfahren gemäß einem der vorhergehenden Ansprüche, wobei alle Übertragungen und alle Zusendungen zwischen dem Arbeitsplatz, dem Server, der vertrauenswürdigen dritten Partei und dem Arbeitsplatz des Empfängers mittels eines abgesicherten Übertragungs-Protokolls, insbesondere vom Typ HTPPS, FTPS oder VPN realisiert sind.

6. Verfahren gemäß einem der vorhergehenden Ansprüche, wobei die vertrauenswürdige dritte Partei einen Zertifikat-Server hat, welcher dazu geeignet ist, elektronische Zertifikate auszugeben.

7. Verfahren gemäß einem der vorhergehenden Ansprüche, wobei zusätzlich zum Versenden einer Informations-Nachricht in Form elektronischer Post zum Arbeitsplatz des Empfängers des Dokuments der Server eine Textnachricht vom Typ SMS zu einem Telefon-Apparat des Empfängers sendet.

8. Verfahren gemäß einem der vorhergehenden Ansprüche, wobei nach Senden einer Benachrichtigungs-Mitteilung zum Arbeitsplatz des Empfängers der Server eine Empfangsbestätigung in Form einer elektronischen Nachricht zum Arbeitsplatz des Autors sendet, um den Autor darüber zu informieren, dass der Empfänger die Benachrichtigungs-Mitteilung empfangen hat.

9. Verfahren gemäß einem der vorhergehenden Ansprüche, wobei nach Abruf des Dokuments durch den Empfänger der Server eine Lesebestätigung in Form einer elektronischen Nachricht zum Arbeitsplatz des Autors sendet, um den Autor darüber zu informieren, dass die eingeschriebene Post vom Empfänger konsultiert wurde.

10. Verfahren gemäß einem der vorhergehenden Ansprüche, wobei das Senden der Benachrichtigungs-Mitteilung zum Arbeitsplatz des Empfängers eine Abruf-Stelle auf dem Server aktiviert, an welcher der Empfänger sich identifizieren und authentifizieren kann, wenn er innerhalb der genannten vorbestimmten Frist auf den Abruf-Link klickt.

11. Verfahren gemäß Anspruch 10, wobei im Falle des Nicht-Aktivierens des Abruf-Links durch den Empfänger innerhalb der vorbestimmten Abruf-Frist die genannte Abruf-Stelle deaktiviert wird.

12. Verfahren gemäß einem der vorhergehenden Ansprüche, wobei das Dokument, auf welches das Einschreiben abzielt, aus einem oder mehreren Dateien irgendeines Formats gebildet werden kann.

13. Verfahren gemäß einem der vorhergehenden Ansprüche, wobei am Arbeitsplatz des Autors ein Treiber installiert ist, welcher an diesem Arbeitsplatz einen virtuellen parametrisierbaren Drucker erzeugt, mittels welchem der Autor das von ihm erzeugte Dokument zum genannten Server übertragen kann.

## Claims

1. A method for managing registered mail via an electronic route, in a system comprising a workstation of an author, a server, a workstation of an addressee, at least one trustworthy third-party, and an editing center, **characterized in that** the method includes the following steps:
- creating the document to be sent to an addressee in the form of registered mail;
- identifying and authenticating the author;
- electronically signing the documents via a trustworthy third-party;
- encrypting the document;
- time-stamping the identification, authentication and encrypting steps;
- transmitting the encrypted document to a server;
- decrypting the document on the server;
- archiving at a trustworthy third-party the identification of the author, the document and the time-stamping information;
- sending a message of information to the workstation of the addressee of the document, said message being an electronic mail containing a link for consulting the document;
- time-stamping said sending step;
- archiving at a trustworthy third-party the information message and the time-stamping information;
said method, in the case of activation of the consulting link by the addressee within a predetermined consulting delay, including the following steps:
- identifying and authenticating the addressee;
- time-stamping the identification and authentication step;
- archiving at a trustworthy third-party the identification, the authentication and the time-stamping information;
- the document being consulted by the addressee, notably by sending a copy of the document on the workstation of the addressee;
- time-stamping the consulting step;
- archiving at a trustworthy third-party the consultation and the time-stamping information;
said method in the case of non-activation of the consulting link by the addressee within said predetermined consulting delay, including the following steps:
- time-stamping the expiry of the consulting delay;
- archiving at a trustworthy third-party the expiry of the consulting delay and time-stamping information;
- sending the document to the editing center for transmission to the addressee in paper form;
- archiving at a trustworthy third-party the sending step in paper form.

2. The method according to claim 1, wherein said steps for authenticating said author and said addressee use electronic certificates.

3. The method according to any one of the preceding claims, wherein said encryption and decryption steps use asymmetrical ciphering.

4. The method according to any one of the preceding claims, wherein said document is transformed on the workstation into a PDF file associated with an XML file, and then said PDF file is signed and then encrypted, and then the encrypted PDF file and the XML file are compressed into an archive file, and then said archive file is encrypted so as to be transmitted to the server.

5. The method according to any one of the preceding claims, wherein all the transmissions and all the sendings between the workstation, the server, the trustworthy third-party and the workstation of the addressee are achieved via a secured transmission protocol, notably of the HTPPS, FTPS or VPN type.

6. The method according to any one of the preceding claims, wherein the trustworthy third-party includes a certification server adapted for transmitting electronic certificates.

7. The method according to any one of the preceding claims, wherein, in addition to sending an information message as an electronic mail to the workstation of the addressee of the document, the server sends a text message of the SMS type to a telephone set of the addressee.

8. The method according to any one of the preceding claims, wherein after sending an information message to the workstation of the addressee, the server sends an acknowledgment of receipt to the workstation of the author as an electronic mail, in order to inform the author that the addressee has received the information message.

9. The method according to any one of the preceding claims, wherein after the document has been consulted by the addressee, the server sends a read acknowledgment to the workstation of the author as an electronic mail, in order to inform the author that the registered mail has been consulted by the addressee.

10. The method according to any one of the preceding claims, wherein the sending of the information message to the workstation of the addressee activates a consultation space on the server, on which the addressee may come and be identified and authenticated when he/she clicks on the consultation link within said predetermined delay.

11. The method according to claim 10, wherein, in the case of non-activation of the consultation link by the addressee within the predetermined consultation delay, said consultation space is deactivated.

12. The method according to any one of the preceding claims, wherein the document subject of the registered mail may be formed with one or several files of any format.

13. The method according to any one of the preceding claims, wherein a driver is installed on the workstation of the author, generating on said workstation a parameterizable virtual printer, via which the author may transmit the document, which he/she has created, to said server.
